# EUROPEAN PATENT SPECIFICATION

(11) **EP 3 868 511 B1**
(45) Date of publication and mention of the grant of the patent: **10.08.2022**
(21) Application number: 21158253.1
(22) Date of filing: 19.02.2021
(51) Int. Cl.: B23Q 3/06

(54) **WORK CENTRE TO PROCESS SECTION BARS, IN PARTICULAR MADE OF ALUMINIUM, LIGHT ALLOYS, PVC OR THE LIKE**
ARBEITSSTATION ZUR VERARBEITUNG VON PROFILSTÄBEN, INSBESONDERE AUS ALUMINIUM, LEICHTLEGIERUNGEN, PVC ODER DERGLEICHEN
CENTRE DE TRAVAIL POUR TRAITER DES PROFILÉS, EN PARTICULIER EN ALUMINIUM, EN ALLIAGES LÉGERS, EN PVC OU ANALOGUES

(30) Priority: 20.02.2020 IT 202000003473
(43) Date of publication of application: 25.08.2021
(73) Proprietor: F.O.M. Industrie S.r.l., 47841 Cattolica (RN) (IT)
(72) Inventor: LATTANZI, Lorenzo, 61121 Pesaro (PU) (IT)
(74) Representative: Manconi, Stefano

(56) References cited:
- EP-A1- 0 036 376
- EP-A1- 3 517 262
- DE-U1-202017 003 923

## Description

### TECHNICAL FIELD

The invention relates to a work centre to process section bars, in particular made of aluminium, light alloys, PVC or the like , according to the preamble of claim 1 (see for example DE 20 2017 003923 U1.

### BACKGROUND ART

In the section bar processing industry, a work centre is known, which comprises an elongated base extending in a substantially horizontal first direction; a plurality of cross members, each mounted on the base parallel to a substantially horizontal second direction, which is transverse to the first direction, movable along the base in the first direction and supporting at least one holding unit designed to hold at least one section bar; and an overhead crane, which extends above the base in the second direction, is provided with an operating head to process (for example, cut and/or mill) the section bar and is movable along the base in the first direction.

Each holding unit comprises a first jaw, which is fixed to the relative cross member in the second direction, a second jaw, which is movable along the relative cross member in the second direction between a clamping position and a release position to clamp and release at least one section bar, and a support roller, which extends through the two jaws in the second direction and defines, together with the other support rollers, a support surface for the section bar.

Each jaw is provided with a bumper, which is made of an elastically deformable material and is designed to come into contact with the section bar.

When the section bar has a configuration that is not perfectly straight and parallel to the first direction and the processing thereof involves the movement of a cross member and of the relative holding unit in the first direction, known work centres of the type described above suffer from some drawbacks, which are mainly due to the fact that the cross member and the relative holding unit are prevented from moving by the interference between the first jaw and the section bar.

### DISCLOSURE OF INVENTION

The object of the present invention is to provide a work centre to process section bars, in particular made of aluminium, light alloys, PVC or the like, which is designed to eliminate the aforementioned drawbacks in a straightforward and relatively low-cost manner.

According to the invention, there is provided a work centre to process section bars, in particular made of aluminium, light alloys, PVC or the like, according to the appended claims.

### BRIEF DESCRIPTION OF THE DRAWINGS

The invention will now be described with reference to the accompanying drawings showing a non-limiting embodiment thereof, wherein:
figure 1 is a schematic perspective view, with parts removed for greater clarity, of a preferred embodiment of the work centre according to the invention;
figure 2 is a schematic plan view, with parts removed for greater clarity, of the wok centre of figure 1;
figure 3 is a schematic perspective view, with parts removed for greater clarity, of a detail of the work centre of figures 1 and 2; and
figures 4 and 5 are two schematic side views, with parts removed for greater clarity, of the detail of figure 3, which is shown in two different operating positions.

### BEST MODE FOR CARRYING OUT THE INVENTION

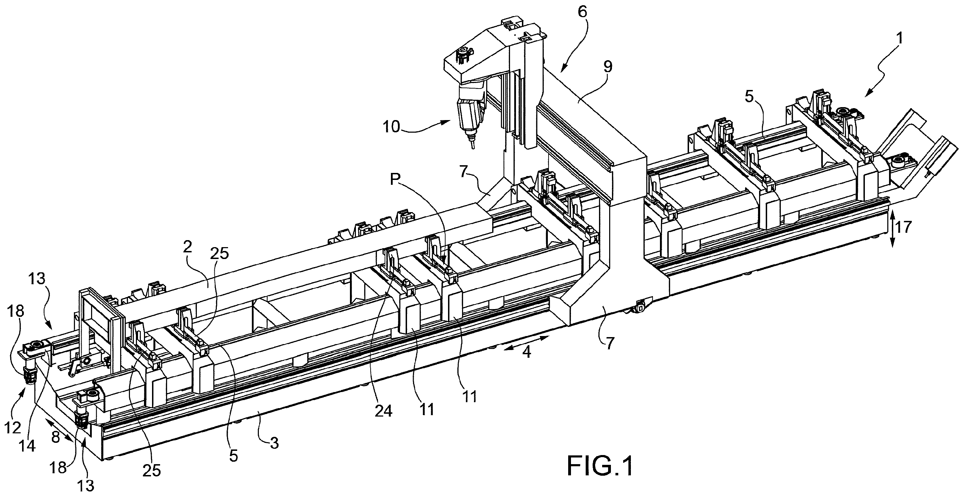

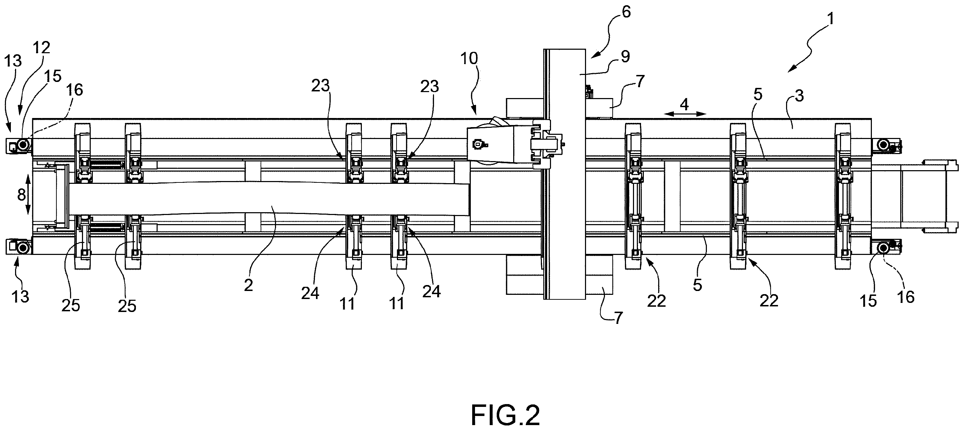

With reference to figures 1 and 2, number 1 indicates, as a whole, a work centre to process section bars 2 made of aluminium, light alloys, PVC or the like and having an elongated shape.

The work centre 1 comprises an elongated base 3, which extends in a horizontal direction 4, is substantially U-shaped and is provided with two longitudinal guide members 5, which are parallel to the direction 4.

The work centre 1 further has a gantry overhead crane 6 comprising a pair of vertical uprights 7, which are arranged on opposite sides of the base 3 in a horizontal direction 8, which is transverse to the direction 4, and are coupled to the base 3 in a known manner so as to make straight movements along the base 3 in the direction 4.

The two uprights 7 carry, connected to their free ends, a cross member 9, which extends above the base 3 in the direction 8 and supports a known operating head 10, which is coupled to the cross member 9 in a known manner so as to make straight movements along the cross member 9 in the direction 8.

The head 10 is configured to process, for example mill and/or drill and/or cut, the section bars 2.

According to a variant which is not shown herein, the overhead crane 6 comprises one single upright 7.

The work centre 1 further has a plurality of cross members 11, which extend between the longitudinal members 5 in the direction 8 and are coupled to the longitudinal members 5 in a sliding manner so as to be moved, by an operating device 12, along the longitudinal members 5 in the direction 4.

The device 12 comprises two belt conveyors 13, which are parallel to one another, extend in the direction 4 and are mounted on opposite sides of the longitudinal members 5 in the direction 8.

Each conveyor 13 comprises a belt 14, which is wound in a ring shape around a pair of idler pulleys 15 mounted so as to rotate around respective rotation axes 16, which are parallel to one another and to a vertical direction 17, which is orthogonal to the directions 4 and 8.

Each cross member 11 is provided with two coupling devices 19 to couple the cross member 11 to the belts 14 and with two locking devices 20 to lock the cross member 11 on the longitudinal members 5.

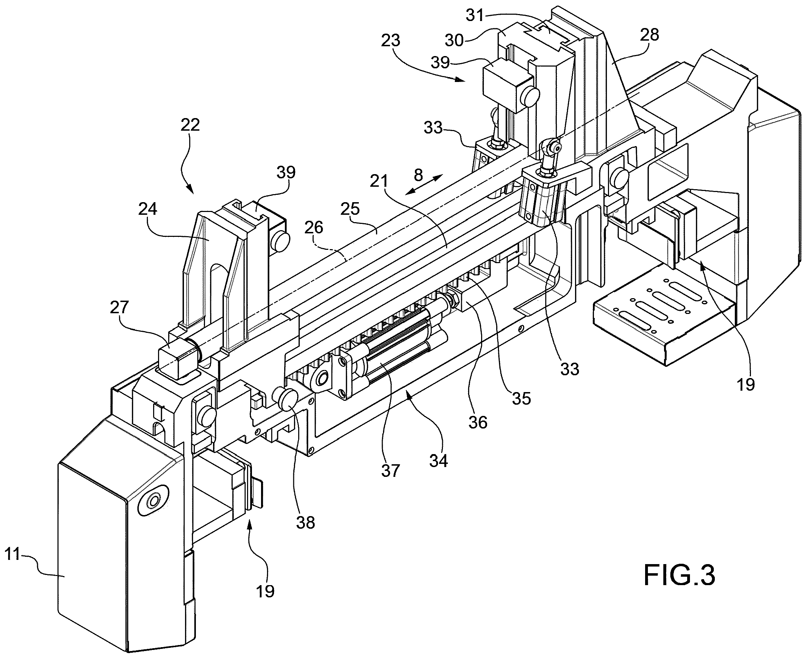

According to figures 3, 4 and 5, each cross member 11 is provided with a straight guide 21, which is fixed on an upper face of the cross member 11 parallel to the direction 8 and supports a clamping vice 22 comprising two holding jaws 23, 24 extending upwards from the cross member 11 in the direction 17.

The vice 22 further comprises a support roller 25, which is mounted so as to rotate around a rotation axis 26 parallel to the direction 8 and defines, together with the rollers 25 of the other vices 22, a horizontal support surface P for a section bar 2.

The roller 25 extends through the jaws 23, 24 in the direction 8, is substantially aligned with the guide 21 in the direction 17, is coupled in a rotary manner to the free ends of the output rods 27 (only one of them being shown in figure 3) of two actuator cylinders (not shown) obtained in the cross member 11, and is moved in the direction 17 by the actuator cylinders (not shown) depending on a height of the section bar 2.

The jaw 23 comprises a fixed portion 28, which is locked at a free end of the guide 21 and is delimited by a flat face 29, which faces the jaw 24 and is inclined relative to the surface P according to an angle other than 90°.

The jaw 23 further comprises a movable portion 30, which is coupled in a sliding manner to a straight guide 31 obtained on the face 29, is moved along the guide 31 in a direction 32 parallel to the face 29 by a pair of actuator cylinders 33 and is substantially aligned with the roller 25 in the direction 32.

In other words, the portion 30 is moved along the guide 31 in the direction 32 with a straight motion comprising a motion component parallel to the direction 8 and a motion component parallel to the direction 17.

The jaw 24 is coupled to the guide 21 in a sliding manner so as to make straight movements in the direction 8 between a clamping position and a release position to clamp and release a section bar 2.

The jaw 24 is moved along the guide 21 by an operating device 34 comprising a rack 35, which extends along the cross member 11 in the direction 8, is coupled to the cross member 11 in a sliding manner and is connected to an output rod 36 of an actuator cylinder 37 fixed to the cross member 11 parallel to the direction 8.

The jaw 24 is locked on the rack 35 by means of a locking pin 38, whose disengagement from the rack 35 allows the jaw 24 to be selectively moved along the rack 35 in the direction 8.

The portion 30 and the jaw 24 are provided with respective bumpers 39, which are made of an elastically deformable material, face one another, substantially have the shape of a parallelepiped and are coupled in a sliding manner to the portion 30 and to the jaw 24, respectively, so as to be manually moved in the direction 17 during a stet-up of the vice 22.

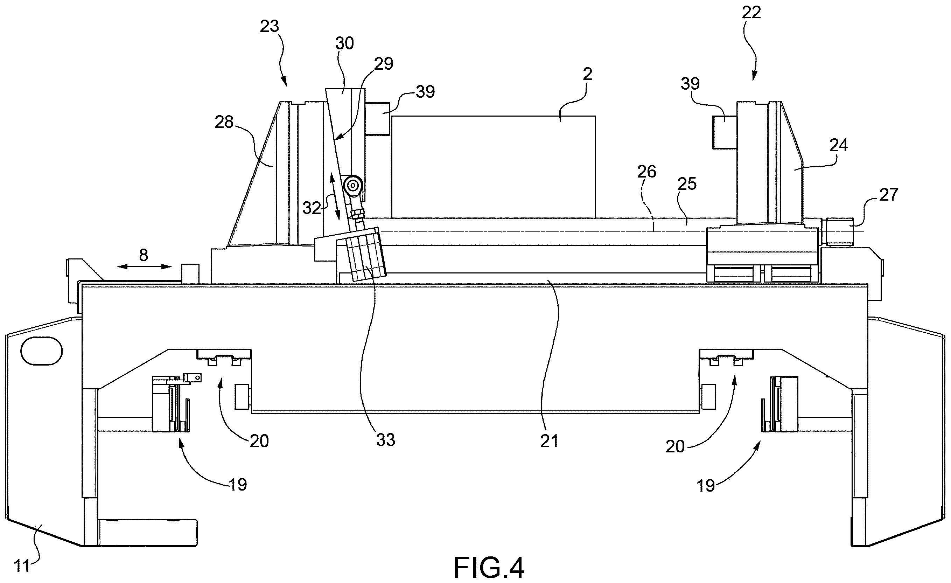

In use, when the section bar 2 has a configuration that is not perfectly straight and parallel to the direction 4 (figure 2) and the processing thereof requires a movement of a cross member 11 and of the relative vice 22 in the direction 4, the portion 30 is lifted along the guide 31 in the direction 32 (figure 4) so as to disengage the relative bumper 39 from the section bar 2 and allow the cross member 11 to move in the direction 4.

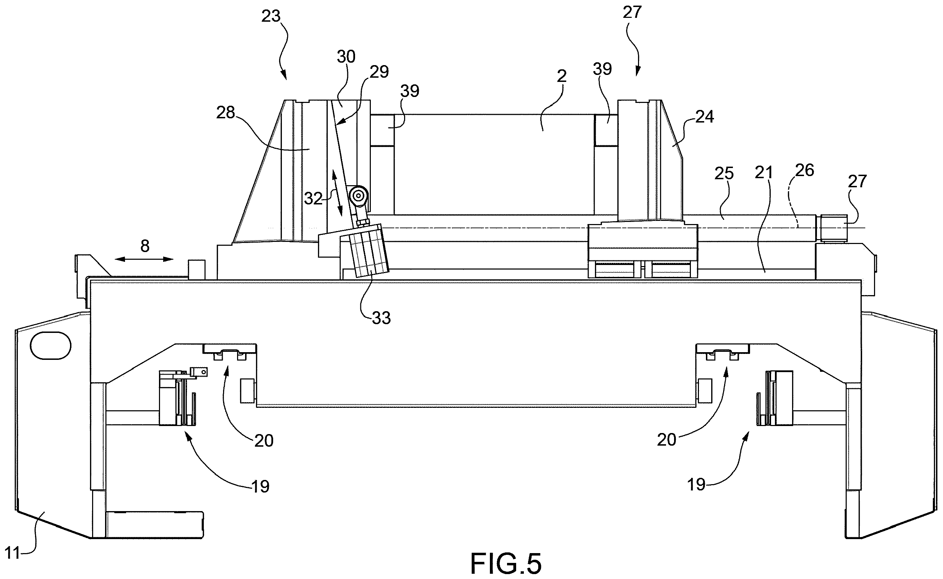

Once the cross member 11 has moved in the direction 4, the portion 30 is lowered along the guide 31 in the direction 32 (figure 5) so as to engage the relative bumper 39 on the section bar 2, straighten the section bar 2 in the direction 8 and lock the section bar 2 against the jaw 24 and the surface P in the direction 17.

Owing to the above, the fixed portions 28 ensure the correct positioning of the section bars 2 in the direction 8 and the movable portions 30 allow the cross members 11 and the relative clamping vices 22 to be moved in the direction 4 without interfering with the section bars 2.

## Claims

1. A work centre to process section bars (2), in particular made of aluminium, light alloys, PVC or the like, comprising an elongated base (3) extending in a first direction (4); a plurality of cross members (11), each mounted on the base (3) parallel to a second direction (8), which is transverse to the first direction (4), and supporting at least one holding unit (22) designed to hold at least one section bar (2); and a gantry (6), which extends above the base (3) in the second direction (8) and is provided with an operating head (10) to process the section bars (2); each holding unit (22) comprising a first jaw (23) comprising, in turn, a fixed portion (28) locked on the relative cross member (11) in the second direction (8); and a second jaw (24), which is movable along the relative cross member (11) in the second direction (8) between a clamping position and a release position to clamp and release the section bar (2); and **characterized in that** the first jaw (23) further comprises a movable portion (30), which is coupled to the fixed portion (28) so as to move, relative to the fixed portion (28), with at least one component of movement which is parallel to the second direction (8).

2. A work centre according to claim 1, wherein each holding unit (22) comprises support means (25) defining a support surface (P) for the section bar (2); the movable portion (30) being coupled to the fixed portion (28) so as to move in a third direction (32), which is oriented according to an angle other than 0° and 90° relative to the support surface (P).

3. A work centre according to claim 2, wherein the fixed portion (28) is provided with a guide (31), which extends in the third direction (32) and is engaged in a sliding manner by the movable portion (30).

4. A work centre according to claim 2 or 3, wherein each holding unit (22) further comprises an operating device (33) to move the movable portion (30) along the fixed portion (28) in the third direction (32).

5. A work centre according to any one of the claims from 2 to 4, wherein the movable portion (30) is aligned with the support bar (25) in the third direction (32).

6. A work centre according to any one of the preceding claims, wherein the movable portion (30) is provided with a first bumper (39), which is designed to come into contact with the section bar (2).

7. A work centre according to claim 6, wherein the position of the first bumper (39) along the movable portion (30) can be adjusted in a fourth direction (17) which is orthogonal to said first and second directions (4, 8).

8. A work centre according to any one of the preceding claims, wherein the second jaw (24) is provided with a second bumper (39), which is designed to come into contact with the section bar (2).

9. A work centre according to claim 8, wherein the position of the second bumper (39) along the second jaw (24) can be adjusted in a fourth direction (17) which is orthogonal to said first and second directions (4, 8).

10. A work centre according to any one of the preceding claims, wherein each cross member (11) and the gantry (6) are movable relative to one another in the first direction (4).

## Patentansprüche

1. Arbeitsstation zur Verarbeitung von Profilstäben (2), insbesondere aus Aluminium, Leichtlegierungen, PVC oder dergleichen, aufweisend eine längliche Basis (3), die sich in einer ersten Richtung (4) erstreckt; eine Vielzahl von Querelementen (11), die jeweils parallel an der Basis (3) in einer zweiter Richtung (8), die quer zu der ersten Richtung (4) ist, montiert sind, und mindestens eine Halteeinheit (22) tragen, welche eingerichtet ist, um mindestens einen Profilstab (2) zu halten; und ein Gerüst (6), das sich über die Basis (3) in der zweiten Richtung (8) erstreckt und mit einem Betriebskopf (10) versehen ist, um die Profilstäbe (2) zu verarbeiten; wobei jede Halteeinheit (22) eine erste Backe (23), die wiederrum einen feststehenden Abschnitt (28) aufweist, der an dem relativen Querelement (11) in der zweiten Richtung (8) gesichert ist; und eine zweite Backe (24) aufweist, die entlang des relativen Querelements (11) in der zweiten Richtung (8) zwischen einer Klemmposition und einer Freigabeposition zum Klemmen und Freigeben der Profilstäbe (2) bewegbar ist; und **dadurch gekennzeichnet, dass** die erste Backe (23) ferner einen bewegbaren Abschnitt (30) aufweist, der an den feststehenden Abschnitt (28) gekoppelt ist, so dass er sich relativ zu dem feststehenden Abschnitt (28) mit mindestens einer Bewegungskomponente bewegt, die parallel zu der zweiten Richtung (8) ist.

2. Arbeitsstation nach Anspruch 1, wobei jede Halteeinheit (22) Stützmittel (25) aufweist, die eine Stützoberfläche (P) für den Profilstab (2) definieren; wobei der bewegbare Abschnitt (30) an den feststehenden Abschnitt (28) gekoppelt ist, so dass er sich in einer dritten Richtung (32) bewegt, welche in einem Winkel relativ zu der Stützoberfläche (P) ausgerichtet ist, der sich von 0° und 90° unterscheidet.

3. Arbeitsstation nach Anspruch 2, wobei der feststehende Abschnitt (28) mit einer Führung (31) versehen ist, die sich in der dritten Richtung (32) erstreckt und durch den bewegbaren Abschnitt (30) auf verschiebbare Weise in Wirkverbindung steht.

4. Arbeitsstation nach Anspruch 2 oder 3, wobei jede Halteeinheit (22) ferner eine Betriebsvorrichtung (33) aufweist, um den bewegbaren Abschnitt (30) entlang des feststehenden Abschnitts (28) in der dritten Richtung (32) zu bewegen.

5. Arbeitsstation nach einem der Ansprüche 2 bis 4, wobei der bewegbare Abschnitt (30) in der dritten Richtung (32) an der Stützstange (25) ausgerichtet ist.

6. Arbeitsstation nach einem der vorhergehenden Ansprüche, wobei der bewegbare Abschnitt (30) mit einem ersten Stoßfänger (39) versehen ist, welcher eingerichtet ist, um mit dem Profilstab (2) in Kontakt zu kommen.

7. Arbeitsstation nach Anspruch 6, wobei die Position des ersten Stoßfängers (39) entlang des bewegbaren Abschnitts (30) in einer vierten Richtung (17) einstellbar ist, die orthogonal zu der ersten und zweiten Richtung (4, 8) ist.

8. Arbeitsstation nach einem der vorhergehenden Ansprüche, wobei die zweite Backe (24) mit einem zweiten Stoßfänger (39) versehen ist, welcher eingerichtet ist, um mit dem Profilstab(2) in Kontakt zu kommen.

9. Arbeitsstation nach Anspruch 8, wobei die Position des zweiten Stoßfängers (39) entlang der zweiten Backe (24) in einer vierten Richtung (17) einstellbar ist, die orthogonal zu der ersten und zweiten Richtung (4, 8) ist.

10. Arbeitsstation nach einem der vorhergehenden Ansprüche, wobei jedes Querelement (11) und das Gerüst (6) in der ersten Richtung (4) relativ zueinander bewegbar sind.

## Revendications

1. Centre d'usinage pour traiter des profilés (2), en particulier constitués d'aluminium, d'alliages légers, de poly(chlorure de vinyle), PVC, ou similaires, comprenant une base allongée (3) s'étendant dans une première direction (4) ; une pluralité de traverses (11), chacune étant montée sur la base (3) parallèlement à une deuxième direction (8), qui est transversale à la première direction (4), et portant au moins une unité de tenue (22) conçue pour tenir au moins un profilé (2) ; et un portique (6), qui s'étend au-dessus de la base (3) dans la deuxième direction (8) et est muni d'une tête opérationnelle (10) pour traiter les profilés (2) ; chaque unité de tenue (22) comprenant une première mâchoire (23) comprenant, à son tour, une partie fixe (28) verrouillée sur la traverse (11) associée dans la deuxième direction (8) ; et une deuxième mâchoire (24), qui est mobile le long de la traverse (11) associée dans la deuxième direction (8) entre une position de serrage et une position de libération pour serrer et libérer le profilé (2) ; et **caractérisé en ce que** la première mâchoire (23) comprend en outre une partie mobile (30), qui est couplée à la partie fixe (28) de façon à se déplacer, par rapport à la partie fixe (28), avec au moins une composante de mouvement qui est parallèle à la deuxième direction (8).

2. Centre d'usinage selon la revendication 1, dans lequel chaque unité de tenue (22) comprend des moyens de support (25) définissant une surface de support (P) pour le profilé (2) ; la partie mobile (30) étant couplée à la partie fixe (28) de façon à se déplacer dans une troisième direction (32), qui est orientée selon un angle autre que 0° et 90° par rapport à la surface de support (P).

3. Centre d'usinage selon la revendication 2, dans lequel la partie fixe (28) est munie d'un guide (31), qui s'étend dans la troisième direction (32) et est mis en prise d'une manière coulissante par la partie mobile (30).

4. Centre d'usinage selon la revendication 2 ou 3, dans lequel chaque unité de tenue (22) comprend en outre un dispositif opérationnel (33) pour déplacer la partie mobile (30) le long de la partie fixe (28) dans la troisième direction (32).

5. Centre d'usinage selon l'une quelconque des revendications 2 à 4, dans lequel la partie mobile (30) est alignée avec la barre de support (25) dans la troisième direction (32).

6. Centre d'usinage selon l'une quelconque des revendications précédentes, dans lequel la partie mobile (30) est munie d'un premier butoir (39), qui est conçu pour venir en contact avec le profilé (2).

7. Centre d'usinage selon la revendication 6, dans lequel la position du premier butoir (39) le long de la partie mobile (30) peut être ajustée dans une quatrième direction (17) qui est orthogonale auxdites première et deuxième directions (4, 8).

8. Centre d'usinage selon l'une quelconque des revendications précédentes, dans lequel la deuxième mâchoire (24) est munie d'un deuxième butoir (39), qui est conçu pour venir en contact avec le profilé (2).

9. Centre d'usinage selon la revendication 8, dans lequel la position du deuxième butoir (39) le long de la deuxième mâchoire (24) peut être ajustée dans une quatrième direction (17) qui est orthogonale auxdites première et deuxième directions (4, 8).

10. Centre d'usinage selon l'une quelconque des revendications précédentes, dans lequel chaque traverse (11) et le portique (6) sont mobiles l'un par rapport à l'autre dans la première direction (4).
